# EUROPEAN PATENT SPECIFICATION

(11) **EP 4 364 124 B1**
(45) Date of publication and mention of the grant of the patent: **02.12.2026**
(21) Application number: 23787178.5
(22) Date of filing: 25.09.2023
(51) Int. Cl.: G09B 9/04, G06F 1/16

(54) **MONITOR DISPLAY STAND**
MONITORANZEIGESTÄNDER
SOCLE D'ÉCRAN

(30) Priority: 23.09.2022 GB 202213910
(43) Date of publication of application: 08.05.2024
(73) Proprietor: Vesaro Limited, Sawbridge Hertfordshire CM21 9AN (GB)
(72) Inventor: SLADE, Nevil, Sawbridgeworth, Hertfordshire CM21 9AN (GB)
(74) Representative: Harrison, Michael Robert
(86) International application number: PCT/GB2023/052474
(87) International publication number: WO 2024/062260

(56) References cited:
- CN-A- 110 077 992
- CN-U- 207 199 186
- CN-U- 208 599 153
- CN-U- 208 766 939
- CN-U- 210 348 870
- ES-B1- 2 686 121
- US-A- 5 433 608

## Description

### Field of the invention

This invention relates to monitor display stands and particularly to such stands for use with vehicle simulators.

### Background to the invention

Vehicle simulators are known which have separate monitor display stands, and ES2686121B1 discloses an example.

### Statements of the invention

According to the present invention there is provided a vehicle simulator comprising a vehicle body including a seat and a monitor display stand comprising an elongate base located below said vehicle body, and a monitor support structure mounted on said base, characterised in that said monitor support structure comprises a cantilevered arm extending within the vehicle body and connected to a monitor support column which extends to a position located above said vehicle body, said support structure being adapted to support at least one monitor above said body, whereby the vehicle body can move independently of the monitor display stand.

Preferably, the monitor display stand is arranged to remain static while the vehicle body moves. More preferably, the extent of movement of the vehicle mein body relative to the monitor display stand is several centimetres, preferably from 3.5 to 15 cms.

Preferably, there is a gap between the vehicle body and the monitor display stand at the lower edge of the main body and a flexible barrier is mounted in the gap.

Preferably, the monitor support column extends through a hole in the vehicle body providing a gap therebetween. More preferably, a flexible barrier is mounted in this gap.

### Brief description of the drawings

The accompanying drawings are as follows:
Figure 1 is a perspective view on the rear and one side of a vehicle simulator having a monitor display stand in accordance with the invention;
Figure 2 is a perspective view on the rear and one side of the monitor display stand shown in Figure 1;
Figure 3 is a perspective view on the front and one side of the monitor display stand shown in Figure 1;
Figure 4 is a perspective view on the front and one side of the vehicle simulator of Figure 1;
Figure 5 is a perspective view on the front and one side of the vehicle simulator of Figure 1 with the vehicle body of the simulator set to 80% opacity;
Figure 6 is left side view of the vehicle simulator of Figure 1 with the vehicle body of the simulator being greyed out;
Figure 7 shows the multiple axes though which the vehicle body of the simulator moves; and
Figure 8 illustrates the various motions carried out by the simulator under control of software.

### Detailed description of the invention

The invention will now be described, by way of example only, with reference to the accompanying drawings.

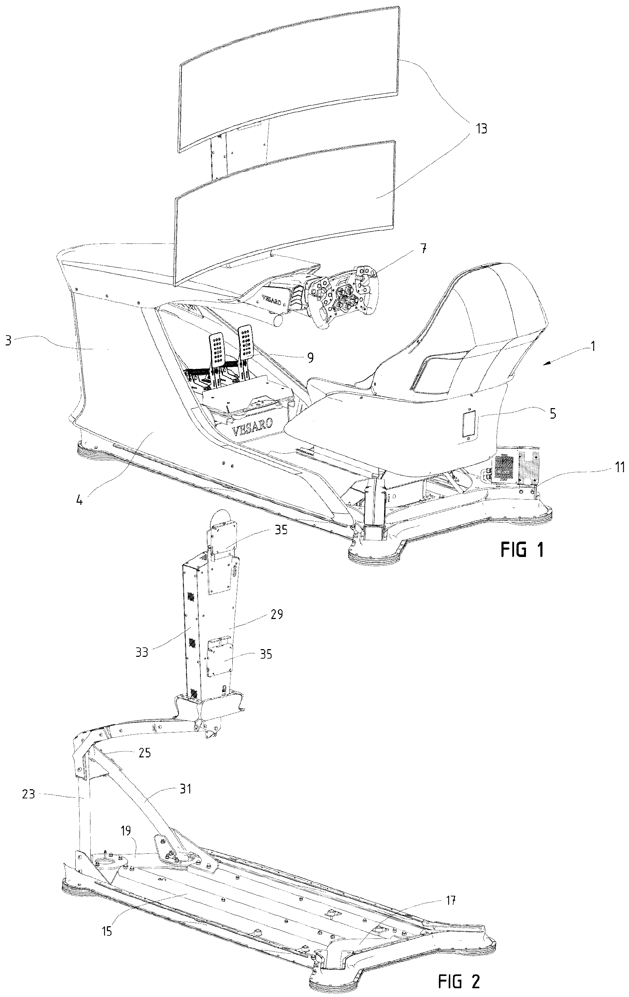

Referring to Figure 1 of the accompanying drawings, a vehicle simulator 1 has a vehicle body 3 which includes a body housing 4, a seat 5, a steering wheel 7 and foot controls 9.

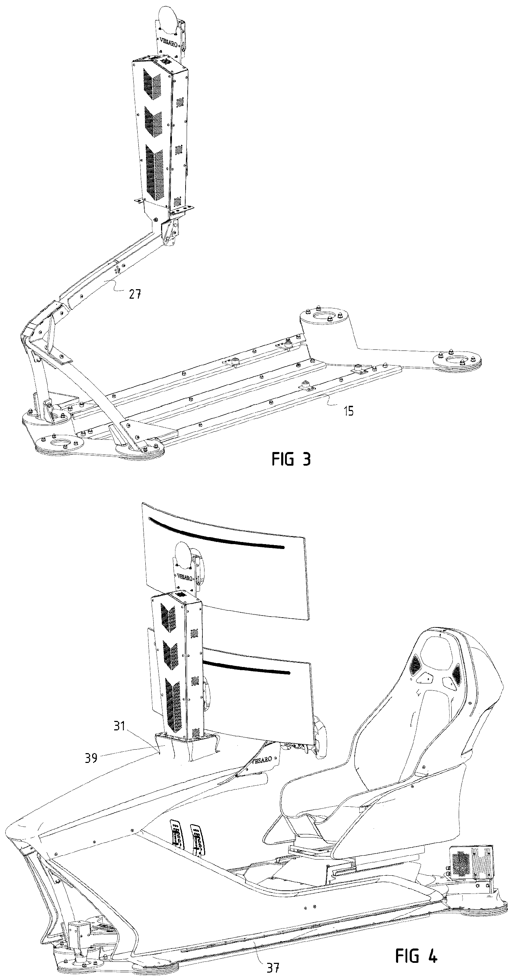

Vehicle body 3 sits on a monitor display stand 11 which supports a pair of monitors 13. The display stand 11 appears to be part of the vehicle body 3 but is in fact a separate structure which is not in contact with any part of the vehicle body 3 and appears to float, remaining static when the vehicle body 3 is moving. Referring to Figures 2 and 3 of the accompanying drawings, the display stand 11 comprises a base 15 having three parallel bars connected at each end by flat angle bar elements 17, 19.

Extending upwardly from the front end of base 15 of display stand 11 are struts 21, 23 which are angled with respect to the vertical and which meet at bracket 25 which lies above the front end of base 15.

Bracket 25 is a gently curved arm 27 which extends rearwardly from bracket 25 so that it overlies base 15 over about two fifths of its length. Column 29 extends upwardly from that end of arm 27 which is remote from bracket 25.

Apart from column 29, the monitor display stand lies wholly within the housing 4 of vehicle body 3. Column 29 extends through a hole 31 in the housing 4 and carries a computer 33. The monitors 13 are mounted directly to the housing of the PC or to brackets 35 attached to the PC housing, thereby providing varying height capability. The cantilever weight loaded design of the monitor display stand allows the monitor to be positioned close to seating position by using a base 15 which positions the centre of gravity past the monitors thereby avoiding the structure toppling over. The base 15 also provides a platform for the vehicle body of the simulator to sit on by effectively clamping the display stand to the floor by utilising the weight of the vehicle body.

The vehicle body 3 of simulator 1 is provided with motion actuators which sit inside cups that form part of the display stand 11. There are two cups in each rear corner and one in the front centre. This arrangement constrains the movement of the vehicle body 3. Typically the extent of movement in each direction is from 3.5 to 15 cms.

In an alternative arrangement, separate cups are provided on the floor rather than on the display stand.

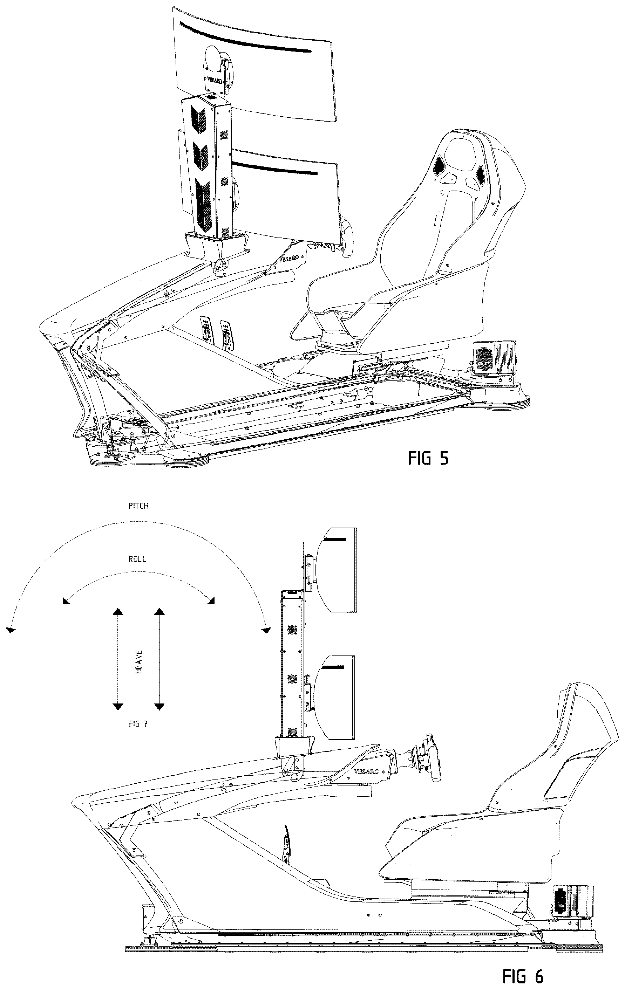

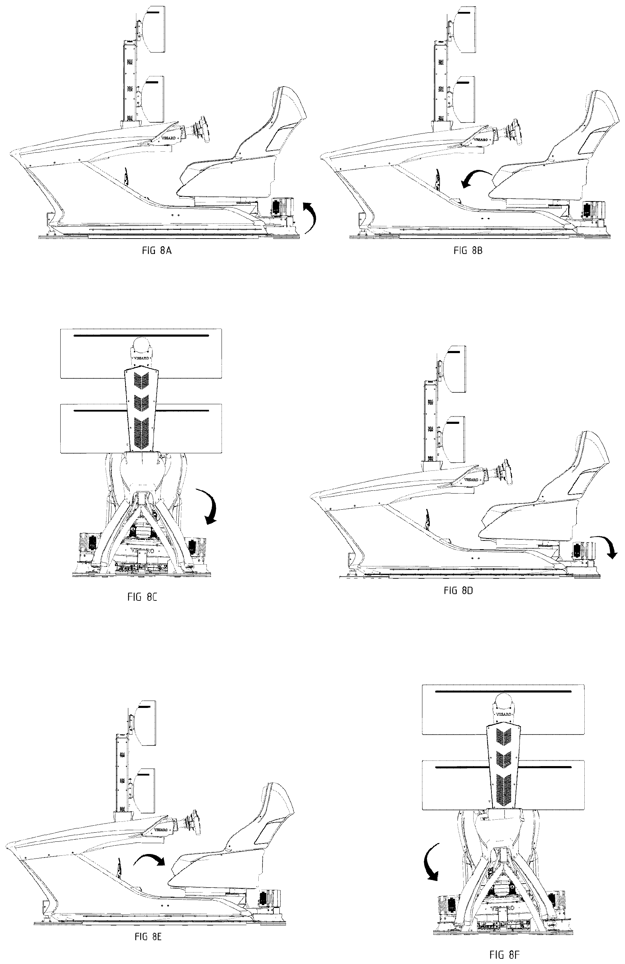

The vehicle simulator 1 uses motion technology to move in multiple axes of pitch, roll and heave, these motions being controlled by software and being illustrated in Figures 7 and 8A to 8F.

The vehicle body 3 of vehicle simulator 1 is provided at its lower edge with a flexible barrier 37 which prevents body parts or objects being inserted into the gap between vehicle body 3 and the base 15. A further flexible barrier 39 provides the same function for the hole 31 through which column 29 passes.

In summary, monitor display stand of the invention holds one or more monitors, orienting them in the correct position relative to the seated user of the simulator. It is in effect an invisible structure as the framework is hidden inside the vehicle body of the simulator. It provides a separate functionality to that of the simulator by not being in contact with any part of the vehicle body.

The vehicle body uses motion technology to move in multiple axes of pitch, roll and heave.

The display stand appears to be part of the vehicle body but is actually separate with the main vertical column passing through a hole in the top of the vehicle body shell. It therefore remains static when the vehicle body of the simulator moves around it and the motion is active.

The cantilever weight loaded design allows the monitors to be positioned close to the seating position with long extending poles that would ordinarily just topple over. This is avoided because the base extends the centre of gravity past the monitors.

## Claims

1. A vehicle simulator comprising a vehicle body (3) including a seat (5) and a monitor display stand (11) comprising an elongate base (15) located below said vehicle body, and a monitor support structure mounted on said base, **characterised in that** said monitor support structure comprises a cantilevered arm (27) extending within the vehicle body and connected to a monitor support column (29) which extends to a position located above said vehicle body, said support structure being adapted to support at least one monitor (13) above said body, whereby the vehicle body can move independently of the monitor display stand.

2. A vehicle simulator according to Claim 1, wherein the monitor display stand is arranged to remain static while the vehicle body moves.

3. A vehicle simulator according to Claim 2, wherein the extent of movement of the vehicle body relative to the monitor display stand is several inches.

4. A vehicle simulator according to any of the preceding claims, wherein there is a gap between the vehicle body and the monitor display stand at the lower edge of the vehicle body and a flexible barrier is mounted in the gap.

5. A vehicle simulator according to any of the preceding claims, wherein the monitor support column extends through a hole in the main body providing a gap therebetween.

6. A vehicle simulator according to Claim 5, wherein, a flexible barrier is mounted in the gap between said hole and said main body.

## Patentansprüche

1. Ein Fahrzeugsimulator mit einer Fahrzeugkarosserie (3) mit einem Sitz (5) und einem Monitorständer (11) mit einer länglichen Basis (15) unterhalb der Fahrzeugkarosserie und einer auf dieser Basis montierten Monitorhalterung. Die Monitorhalterung besteht aus einem freitragenden Arm (27), der sich innerhalb der Fahrzeugkarosserie erstreckt und mit einer Monitorstütze (29) verbunden ist, die sich oberhalb der Fahrzeugkarosserie befindet. Die Halterung ist so ausgelegt, dass sie mindestens einen Monitor (13) oberhalb der Karosserie trägt, wobei sich die Fahrzeugkarosserie unabhängig vom Monitorständer bewegen kann.

2. Ein Fahrzeugsimulator nach Anspruch 1, wobei der Monitorständer so angeordnet ist, dass er während der Bewegung der Fahrzeugkarosserie statisch bleibt.

3. Ein Fahrzeugsimulator nach Anspruch 2, wobei der Bewegungsumfang der Fahrzeugkarosserie relativ zum Monitorständer mehrere Zentimeter beträgt.

4. Fahrzeugsimulator nach einem der vorhergehenden Ansprüche, wobei sich zwischen der Fahrzeugkarosserie und dem Monitorständer an der Unterkante der Fahrzeugkarosserie ein Spalt befindet und eine flexible Barriere in diesem Spalt angebracht ist.

5. Fahrzeugsimulator nach einem der vorhergehenden Ansprüche, wobei sich die Monitorhalterung durch eine Öffnung in der Hauptkarosserie erstreckt und einen Spalt bildet.

6. Fahrzeugsimulator nach Anspruch 5, wobei in dem Spaltzwischen der Öffnung und der Hauptkarosserie eine flexible Barriere angebracht ist.

## Revendications

1. Simulateur de véhicule comprenant une carrosserie (3) dotée d'un siège (5) et un support d'écran (11) comprenant une base allongée (15) située sous ladite carrosserie, et une structure de support d'écran montée sur ladite base, **caractérisée en ce que** ladite structure de support d'écran comprend un bras en porte-à-faux (27) s'étendant à l'intérieur de la carrosserie et relié à une colonne de support d'écran (29) qui s'étend jusqu'à une position située au-dessus de ladite carrosserie. Cette structure de support est conçue pour supporter au moins un écran (13) au-dessus de la carrosserie, permettant ainsi à la carrosserie de se déplacer indépendamment du support d'écran.

2. Simulateur de véhicule selon la revendication 1, dans lequel le support d'écran est conçu pour rester statique pendant le déplacement de la carrosserie.

3. Simulateur de véhicule selon la revendication 2, dans lequel l'amplitude de déplacement de la carrosserie par rapport au support d'écran est de plusieurs centimètres.

4. Simulateur de véhicule selon l'une quelconque des revendications précédentes, dans lequel un espace est ménagé entre la carrosserie du véhicule et le support de l'écran au niveau du bord inférieur de la carrosserie, et une barrière flexible est montée dans cet espace.

5. Simulateur de véhicule selon l'une quelconque des revendications précédentes, dans lequel la colonne de support de l'écran traverse un orifice pratiqué dans le corps principal, ménageant ainsi un espace entre les deux.

6. Simulateur de véhicule selon la revendication 5, dans lequel une barrière flexible est montée dans l'espace entre ledit orifice et ledit corps principal.
